# EUROPÄISCHE PATENTANMELDUNG

(11) **EP 4 817 790 A1**
(43) Veröffentlichungstag der Anmeldung: **07.10.2026**
(21) Anmeldenummer: 26162308.6
(22) Anmeldetag: 04.03.2026
(51) Int. Cl.: B23Q 9/00, B25H 1/00, B62D 65/06, B23B 47/00, B25H 7/00, B62D 29/04

(54) **RAHMENSYSTEM UND WERKZEUG FÜR EINE FAHRZEUGKLAPPE**

(30) Priorität: 15.03.2025 LU 103554
(71) Anmelder: Krumm, Achim, 72348 Rosenfeld (DE)
(72) Erfinder: Krumm, Achim, 72348 Rosenfeld (DE)
(74) Vertreter: Paustian & Partner Patentanwälte mbB

(57) **Zusammenfassung**

Die Erfindung bezieht sich auf ein Rahmensystem (10) für eine Fahrzeugklappe (11), ein Eckprofilstück (20) mit einer Kontur (21) und ein Werkzeug (30). Das Werkzeug (30) ist dazu vorgesehen und geeignet die Kontur (21) des Eckprofilstücks (20) anzuzeigen, wenn das Eckprofilstück (20) durch eine Decklage (101) einer Fahrzeugbauplatte (100) überdeckt ist. Dabei umfasst zumindest eines von Eckprofilstück (20) und Werkzeug (30) zumindest zwei Magneten (41) und das andere von Eckprofilstück (20) und Werkzeug (30) umfasst ein ferromagnetisches Material und/oder zumindest einen Magneten. Dabei richten die Magneten (41) das Werkzeug (30) bezüglich des Eckprofilstücks (20) aus.

## Beschreibung

Die vorliegende Erfindung bezieht sich auf ein Rahmensystem für eine Fahrzeugklappe und ein Werkzeug für die Herstellung einer Fahrzeugklappe mit dem Rahmensystem.

Eine weitverbreitete Bauweise zur Herstellung von Fahrzeugkabinen, wie Wohnkabinen für Reisefahrzeuge ist die Fahrzeugkabinen aus Sandwichplatten, sogenannten Fahrzeugbauplatten aufzubauen. Diese Fahrzeugbauplatten umfassen meist zwei Decklagen und eine zwischenliegende Isolierschicht aus Isoliermaterial, zumeist Schaum. Die Decklagen können aus einem sehr breiten Feld gewählt und kombiniert werden. Häufig sind Decklagen aus Faserverstärkten Kunststoff (z.B. GfK) oder Aluminium. Es sind aber auch Holzwerkstoffe oder andere geeignete Werkstoffe bekannt. Diese werden üblicherweise schichtweise aufeinander gelegt, verklebt und dann zumeist vermittels Vakuum miteinander verpresst. Da bevorzugt die Flächen bzw. Seiten einer Fahrzeugkabine aus einer einzelnen Platte bestehen sollen (Stabilität, Dichtigkeit, etc.), werden großformatige Fahrzeugbauplatten hergestellt.

Öffnungen in den Fahrzeugbauplatten für die notwendigen Türen, Fenster und Stauklappen benötigen zumindest einen Rahmen, der die notwendige Stabilität erzeugt, da eine Sandwichplatte oben beschriebener und üblicher Art instabil ist, wenn eine Öffnung für z.B. eine Stauklappe eingebracht wird. Dem Rahmen einer Fahrzeugklappe, die in eine solche Öffnung eingesetzt wird, kommt hierbei entscheidende Bedeutung zu, da dieser möglichst nicht sichtbar sein soll aber gleichzeitig die Stabilität der Fahrzeugbauplatte gewährleisten muss. Bevorzugt werden Fahrzeugbauplatten mit Fahrzeugklappen so hergestellt, dass die Fahrzeugklappe durch Finden des Rahmens in den durchgehenden Deckslagen aufgeschnitten werden. Hierbei kann es durch Messungenauigkeiten und/oder Fertigungsfehlern zu kostspieligen Beschädigungen der Fahrzeugbauplatte und/oder Fahrzeugklappe kommen.

Die vorliegende Anmeldung hat es daher zur Aufgabe ein Rahmensystem für Fahrzeugklappen und Werkzeug vorzuschlagen, mit dem Fahrzeugklappen einfacher und qualitativ hochwertiger hergestellt werden können. Diese Aufgabe wird durch ein Rahmensystem und ein Werkzeug entsprechend den beigefügten unabhängigen Ansprüchen gelöst.

Nach einem Aspekt der vorliegenden Anmeldung umfasst ein Rahmensystem für eine Fahrzeugklappe zumindest ein Eckprofilstück mit einer Kontur und ein Werkzeug. Die Kontur kann z.B. ein scharfes Eck oder ein Radius sein und eine Ecke der Klappe darstellen. Das Werkzeug ist dazu vorgesehen und geeignet die Kontur des Eckprofilstücks anzuzeigen, wenn das Eckprofilstück durch eine Decklage einer Fahrzeugbauplatte überdeckt ist. Dabei umfasst zumindest eines von Eckprofilstück und Werkzeug zumindest zwei Magneten und das andere von Eckprofilstück und Werkzeug umfasst ein magnetisierbares Material und/oder zumindest einen Magneten. Dabei richten die Magneten das Werkzeug bezüglich des Eckprofilstücks aus. Mit anderen Worten kann das Werkzeug auf die Decklage einer Fahrzeugbauplatte aufgesetzt werden, in welcher das Eckprofilstück enthalten ist und das Werkzeug wird sich bezüglich des Eckprofilstücks ausrichten, auch wenn Eckprofilstück und Werkzeug durch die Decklage getrennt sind und das Eckprofilstück wegen der Decklage nicht sichtbar ist. Das Werkzeug kann überwiegend aus einem nicht magnetischen Material gefertigt sein Dies kann den Vorteil haben, dass ein Eckprofilstück in einer Fahrzeugbauplatte gefunden werden kann und das Werkstück sicher und präzise positioniert bzw. ausgerichtet wird. Magnetisierbar im Rahmen dieser Offenbarung bezieht sich auf Materialien, die so durch einen im Rahmen dieser Offenbarung verwendungsüblichen Magneten magnetisierbar sind, dass Werkzeug und Eckprofilstück aneinanderhaften. Dies kann z.B. ein Stahlwerkstoff oder sonstiger ferromagnetischer Werkstoff sein.

Nach einem weiteren Aspekt umfasst das Werkzeug und Eckprofilstück eines Rahmensystems zumindest jeweils zwei Magneten. Dies kann den Vorteil haben, dass die Genauigkeit der Ausrichtung und Haltekraft des Werkzeugs gesteigert werden kann.

Nach einem weiteren Aspekt der vorliegenden Anmeldung überdecken sich bei einem Rahmensystem die Position der Magneten bzw. des magnetisierbaren Materials im Eckprofilstück und im Werkzeug nicht vollständig, wenn das Werkzeug mit dem Eckprofilstück ausgerichtet ist. Dies kann den Vorteil haben, dass das Werkzeug durch die wirkenden Magnetkräfte in eine gewählte Position bezüglich dem Eckprofilstück gezogen wird, da sich beide Magneten im Werkzeug versuchen sich gegenüber den Magneten im Eckprofilstück auszurichten. Dies kann den Vorteil haben, dass die Genauigkeit der Ausrichtung und Haltekraft des Werkzeugs gesteigert werden kann.

Nach einem weiteren Aspekt umfasst das Werkzeug bei einem Rahmensystem einen Konturanschlag. Dies kann den Vorteil haben, dass die Kontur des Eckprofilstücks einfach angezeichnet werden kann, da die Kontur des Konturanschlags und des Eckprofilstücks in Bezug zueinander gewählt wurden. Dies kann die gleiche Kontur sein oder eine gewählte Abweichung des Konturanschlags von der Kontur des Eckprofilstücks, z.B. um die Mitte eines Klappenspaltes anzuzeigen. Dies kann den Vorteil haben, dass die Herstellung einer Fahrzeugklappe einfacher wird.

Nach einem Aspekt der vorliegenden Anmeldung umfasst ein Werkzeug für ein Rahmensystem zumindest einen Magneten und einen Radiusanschlag. Dies kann den Vorteil haben, dass die Herstellung einer Fahrzeugklappe durch die Verwendung des Werkzeuges einfacher wird.

Nach einem weiteren Aspekt weist ein Werkzeug eine Führungsschienenbefestigung auf. Dies kann den Vorteil haben, dass z.B. eine Führungsschiene einer Tauchsäge bzw. eines Handwerkzeugs oder Anreißsystems direkt an das Werkzeug befestigt werden kann.

Nach einem weiteren Aspekt der vorliegenden Anmeldung umfasst ein Werkzeug zumindest eine Kompensationseinrichtung. Mit der Kompensationseinrichtung kann eine gewünschte Kompensation für z.B. eine Sägeblattdicke oder Strichstärke erreicht werden. Dies kann den Vorteil haben, dass die Herstellung einer Fahrzeugklappe durch die Verwendung des Werkzeuges genauer wird.

Nach einem weiteren Aspekt der vorliegenden Anmeldung wirkt die Kompensationseinrichtung eines Werkzeugs auf einen Konturanschlag und/oder eine Führungsschienenbefestigung. Hierdurch kann z.B. der Konturanschlag so kompensiert werden, dass die Strichstärke eines dicken Filzstiftes berücksichtig wird. Bei einer Führungsschienenbefestigung kann eine Sägeblattbreite berücksichtig werden. Dies kann den Vorteil haben, dass die Herstellung einer Fahrzeugklappe durch die Verwendung des Werkzeuges genauer wird.

Nach einem weiteren Aspekt der vorliegenden Anmeldung weist ein Werkzeug eine Unterdruckeinrichtung auf. Dies kann z.B. ein Saugnapf sein. Dadurch kann das über die Magneten ausgerichtete Werkzeug in der ausgerichteten Position zusätzlich befestigt werden, sodass z.B. beim Schneiden mit einer Tauchsäge kein Verrutschen des Werkzeuges möglich ist. Dies kann den Vorteil haben, dass die Herstellung einer Fahrzeugklappe durch die Verwendung des Werkzeuges genauer und einfacher wird.

Nach einem weiteren Aspekt der vorliegenden Anmeldung weist ein Werkzeug eine Positionsreferenz auf. Dies kann z.B. eine Bohrung sein, die mit einem Messtaster angefahren werden kann, oder ein optisches Target, das von einem optischen System erfasst werden kann. Damit kann die Position des Werkzeuges z.B. durch eine Bearbeitungsmaschine erfasst werden und dann die Fahrzeugklappe zum Beispiel durch die Bearbeitungsmaschine ausgeschnitten werden. Dies kann den Vorteil haben, dass die Herstellung einer Fahrzeugklappe durch die Verwendung des Werkzeuges genauer und einfacher wird

Nach einem Aspekt der vorliegenden Anmeldung weist ein Werkzeug zwei Magneten auf. Dies kann den Vorteil haben, dass die Positioniergenauigkeit des Werkzeugs gesteigert werden kann.

Zum besseren Verständnis der Erfindung wird diese anhand der nachfolgenden Figuren näher erläutert. Es zeigen jeweils in stark vereinfachter, schematischer Darstellung:
Fig. 1 eine Vorderansicht eines Werkzeugs gemäß einer Ausführungsform.
Fig. 2 eine Hinteransicht des Werkzeugs aus Fig. 1.
Fig. 3 eine Vorderansicht eines Werkzeugs gemäß einer weiteren Ausführungsform.
Fig. 4 eine Hinteransicht des Werkzeugs aus Fig. 2.
Fig.5 zwei Eckprofilstücke in einer Draufsicht.
Fig. 6 eine schematische Anordnung eines Eckprofilstücks und Werkzeugs.
Fig. 7 eine schematische Anordnung eines weiteren Eckprofilstücks und weiteren Werkzeugs.

Einführend sei festgehalten, dass die in der Beschreibung gewählten Lageangaben, wie z.B. oben, unten, seitlich usw. auf die unmittelbar beschriebene sowie dargestellte Figur bezogen sind und diese Lageangaben sind bei einer Lageänderung sinngemäß auf die neue Lage zu übertragen.

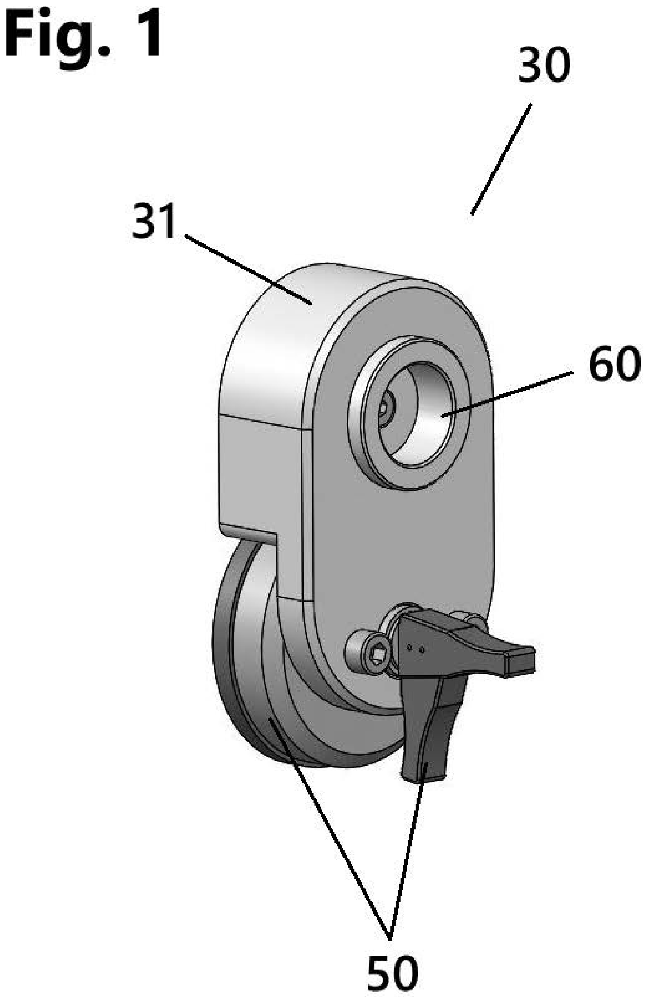

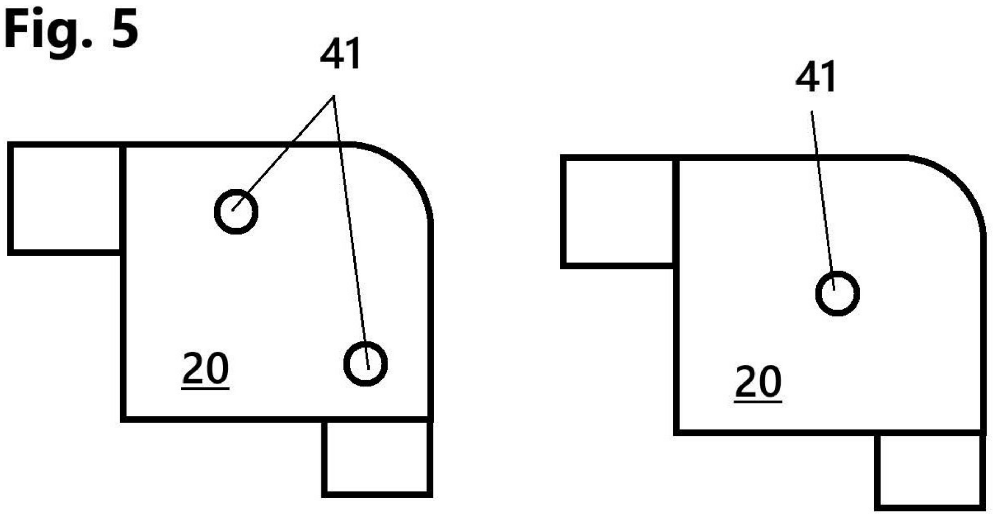

Es wird anfänglich Bezug genommen auf Fig. 1 in welcher eine Vorderansicht eines Werkzeugs 30 gemäß einer Ausführungsform dargestellt ist. Das Werkzeug 30 umfasst einen Konturanschlag 31, eine Positionsreferenz 60 und eine als Saugnapf 50 ausgeführte Unterdruckeinrichtung 50. Der Konturanschlag ist hier ein Radiusanschlag 31, der bezüglich des Radius des Eckprofilstücks (siehe Fig. 5) gewählt werden kann. Die Positionsreferenz 60 ist hier eine Bohrung mit z.B. hoher Genauigkeit, sodass diese mit einem Messtaster angefahren und die Position des Werkzeugs 30 z.B. in einer Bearbeitungsmaschine (z.B. Bearbeitungszentrum) bestimmt werden kann. Die Positionsreferenz kann z.B. auch ein optisches Target sein. Der Radiusanschlag 31 weist z.B. den gleichen Radius auf, wie ein Eckprofilstück 20 (nicht gezeigt in Fig. 1). Der Saugnapf 60 hält das Werkzeug 30 zusätzlich fest.

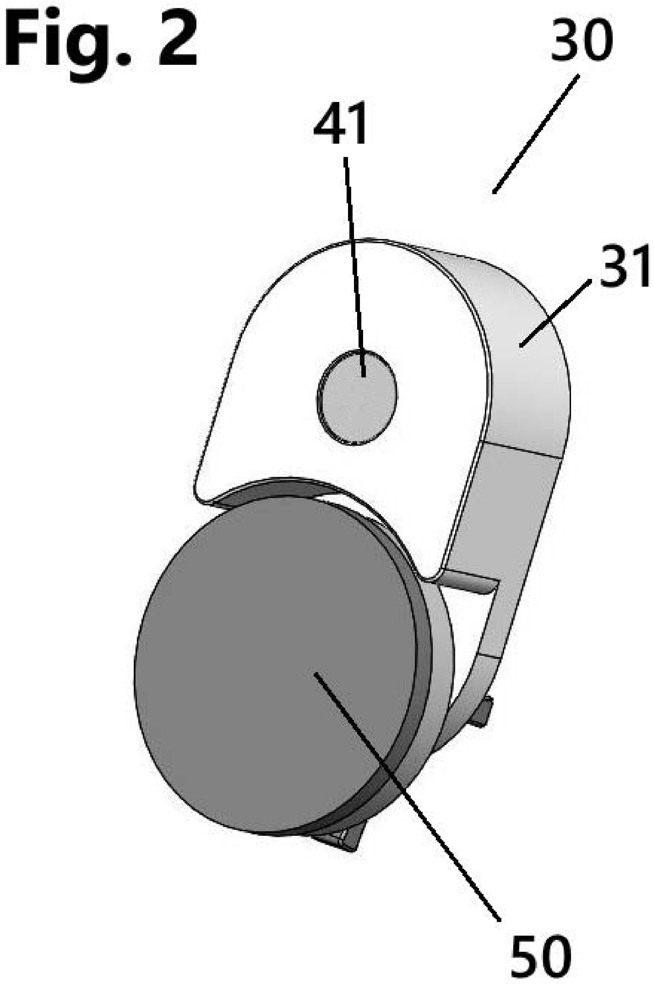

Fig. 2 zeigt eine Hinteransicht des in Fig. 1 gezeigten Werkzeugs 30. Das Werkzeug 30 weist weiterhin einen Magneten 41 auf. Mit dem Magneten 41 kann das Werkzeug 30 mit einem Eckprofilstück 20 (nicht gezeigt in Figs. 1 und 2, siehe Figs 5 bis 7) verbunden werden. Das Werkzeug kann eine Kompensationseinrichtung 33 umfassen, welche auf den Konturanschlag 31 wirkt bzw. diesen verstellen kann. Eine Kompensationseinrichtung 33 kann weiterhin auf eine nicht gezeigte Führungsschienenbefestigung 32 wirken, bzw. diese einstellen. Die nicht gezeigte Führungsschienenbefestigung 32 ist dazu vorgesehen und geeignet, dass Führungsschienen, wie z.B. Führungsschienen von Tauchsägen bzw. Handwerkzeugen oder Anreißsystemen mit ihr verbunden werden können. Die nicht gezeigte Führungsschienenbefestigung 32 kann z.B. an einer Seitenfläche des Werkzeugs 30 angeordnet werden.

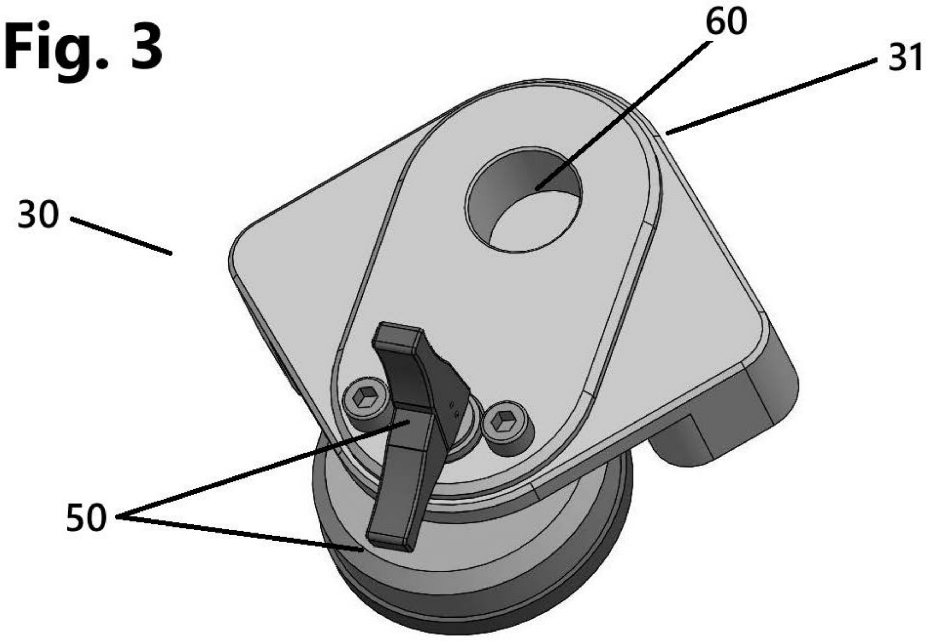

Fig. 3 zeigt eine Vorderansicht eines Werkzeugs 30 gemäß einer weiteren Ausführungsform. Das Werkzeug 30 umfasst einen Radiusanschlag 31, eine Positionsreferenz 60 und eine als Saugnapf 50 ausgeführte Unterdruckeinrichtung 50 (siehe oben).

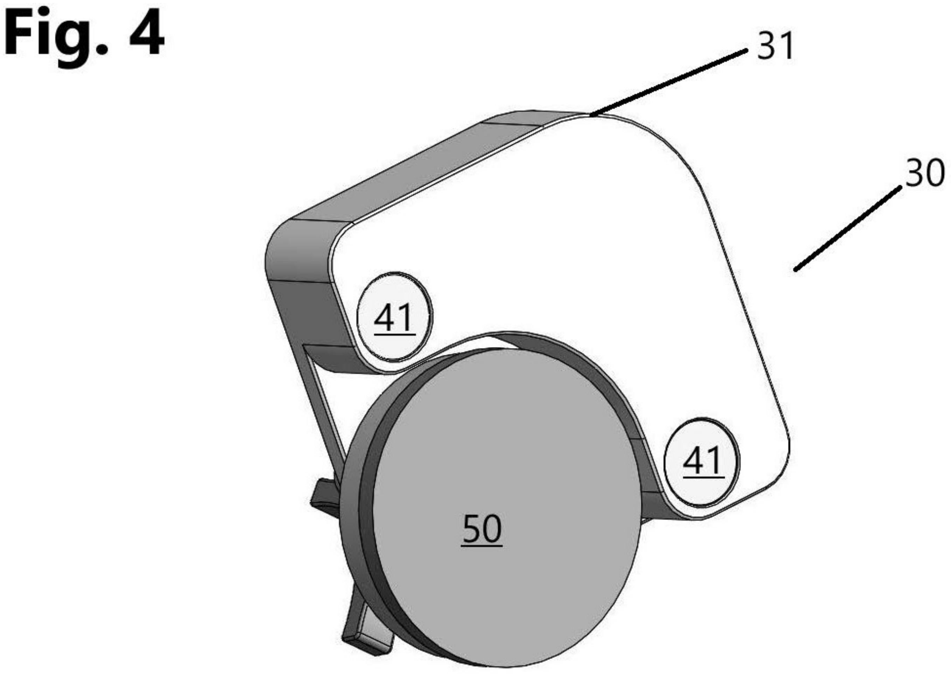

Fig. 4 zeigt eine Hinteransicht des in Fig. 3 gezeigten Werkzeugs 30. Das Werkzeug 30 weist weiterhin zwei Magneten 41 auf. Mit den Magneten 41 kann das Werkzeug 30 mit einem Eckprofilstück 20 (nicht gezeigt in Figs. 3 und 4, siehe Figs. 5 bis 7) verbunden werden. Das Werkzeug kann eine Kompensationseinrichtung 33 umfassen, welche auf den Konturanschlag 31 wirkt bzw. diesen verstellen kann. Eine Kompensationseinrichtung 33 kann weiterhin auf eine nicht gezeigte Führungsschienenbefestigung 32 wirken, bzw. diese einstellen. Die nicht gezeigte Führungsschienenbefestigung 32 ist dazu vorgesehen und geeignet, dass Führungsschienen, wie z.B. Führungsschienen von Tauchsägen bzw. Handwerkzeugen oder Anreißsystemen mit ihr verbunden werden können. Die nicht gezeigte Führungsschienenbefestigung 32 kann z.B. an einer Seitenfläche des Werkzeugs 30 angeordnet werden.

Fig. 5 zeigt eine schematische Ansicht zweier Varianten von Eckprofilstücken 20. Die links dargestellte Version weist zwei Magneten 41 auf und passt mit dem in Figs. 3 und 4 dargestellten Werkzeug zusammen. Dabei sind die Magneten 41 in Werkzeug 30 und Eckprofilstück 20 so angeordnet, dass sie sich jeweils nicht komplett decken und so das Werkzeug 30 in eine bestimmte Position gezogen wird. Das Werkzeug 30 wird sozusagen magnetisch in eine bestimmte Position vorgespannt. Die rechts dargestellte Version weist einen Magneten 41 auf und passt mit dem in Figs. 1 und 2 dargestellten Werkzeug zusammen. Die an den Eckprofilstücken 20 dargestellten Radien entsprechen z.B. den Radien der Konturanschläge 31, können aber unterschiedlich gewählt werden. Die jeweils dargestellten Fortsätze der Eckprofilstücke 20 dienen dazu, dass weitere Profilstücke mit den Eckprofilstücken 20 des Rahmensystems 10 verbunden werden können.

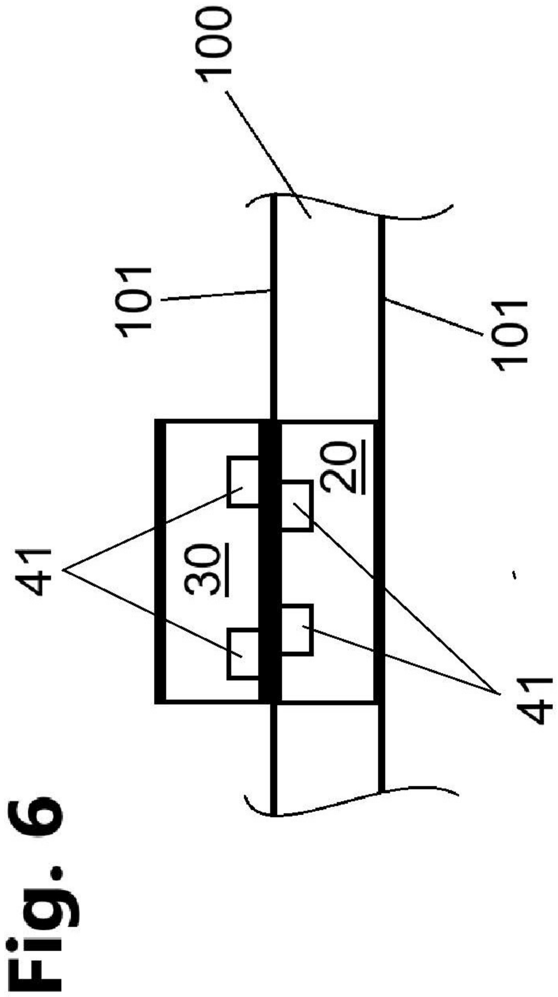

Fig. 6 zeigt eine schematische Anordnung eines Eckprofilstücks 20 und Werkzeugs 30 mit Bezug zu einer Fahrzeugbauplatte 100 in einer Schnittansicht von der Seite, welche jeweils an den Außenseiten eine Deckschicht 101 aufweist, wie dies bekannt ist. Das Eckprofilstück 20 ist in der Fahrzeugbauplatte 100 befindlich und das Werkzeug 30 auf die Deckschicht 101 aufgesetzt. Die Magneten 41 ziehen sich durch die Deckschicht 101 hindurch an und positionieren das Werkzeug gegenüber dem Eckprofilstück 20. In Fig. 6 ist die unterschiedliche Position der Magneten 41 in Werkstück 30 und Eckprofilstück 20 bzw. deren Versatz zueinander beispielhaft dargestellt. Durch die sich nicht deckenden Positionen der Magneten 41 wird das Werkzeug in eine gewünschte Position gezwungen.

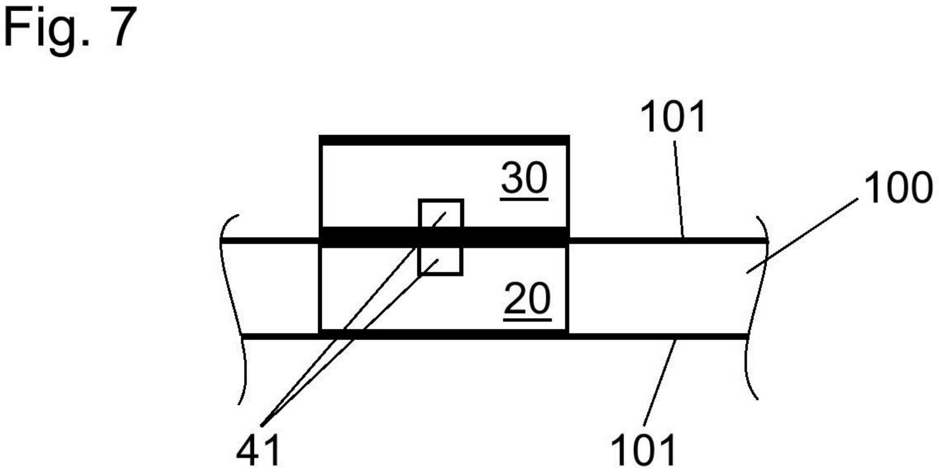

Fig. 7 zeigt eine zu Fig. 6 ähnliche Ansicht, jedoch mit dem in Figs. 1 und 2 dargestellten Werkzeug 30 aufweisend nur einen Magneten und dem in Fig. 5 rechts dargestellten Eckprofilstück 20.

Es sei an dieser Stelle bemerkt, dass die Erfindung nicht auf die speziell dargestellten Ausführungsvariante eingeschränkt ist, sondern Variationsmöglichkeiten aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 10: Rahmensystem
- 11: Fahrzeugklappe
- 20: Eckprofilstück
- 30: Werkzeug
- 31: Konturanschlag bzw. Radiusanschlag
- 32: Führungsschienenbefestigung
- 33: Kompensationseinrichtung
- 41: Magnet
- 50: Unterdruckeinrichtung
- 60: Positionsreferenz
- 100: Fahrzeugbauplatte
- 101: Decklage

## Patentansprüche

1. Rahmensystem (10) für eine Fahrzeugklappe (11), umfassend ein Eckprofilstück (20) mit einer Kontur (21) und ein Werkzeug (30) dazu vorgesehen und geeignet die Kontur anzuzeigen, wenn das Eckprofilstück durch eine Decklage (101) einer Fahrzeugbauplatte (100) überdeckt ist, und wobei zumindest eines von Eckprofilstück und Werkzeug zumindest zwei Magneten (41) umfasst und das andere von Eckprofilstück und Werkzeug umfasst ein magnetisierbares Material oder zumindest einen Magneten, und wobei die Magneten das Werkzeug bezüglich des Eckprofilstücks ausrichten.

2. Rahmensystem (10) nach Anspruch 1, wobei das Eckprofilstück (20) und das Werkzeug (30) jeweils zumindest zwei Magneten (41) umfassen.

3. Rahmensystem (10) nach Anspruch 1 oder 2, wobei sich die Position der Magneten (41) bzw. des magnetisierbaren Materials im Eckprofilstück (20) und im Werkzeug (30) nicht vollständig überdecken, wenn das Werkzeug mit dem Eckprofilstück ausgerichtet ist.

4. Rahmensystem (10) nach einem der vorangegangenen Ansprüche, wobei das Werkzeug (30) einen Konturanschlag (31) umfasst.

5. Werkzeug (30) für ein Rahmensystem (10), umfassend zumindest einen Magneten (41) und einen Konturanschlag (31).

6. Werkzeug (30) nach Anspruch 5, wobei das Werkzeug (30) weiterhin eine Führungsschienenbefestigung (32) aufweist.

7. Werkzeug (30) nach Anspruch 5 oder 6, weiterhin zumindest eine Kompensationseinrichtung (33) umfassend.

8. Werkzeug (30) nach Anspruch 7, wobei Konturanschlag (31) und/oder Führungsschienenbefestigung (32) eine auf sie wirkende Kompensationseinrichtung (33) aufweist/aufweisen.

9. Werkzeug (30) nach einem der Ansprüche 5 bis 8, weiterhin eine Unterdruckeinrichtung (50) aufweisend.

10. Werkzeug (30) nach einem der Ansprüche 5 bis 9, weiterhin aufweisend eine Positionsreferenz (60).

11. Werkzeug (30) nach einem der Ansprüche 5 bis 10, weiterhin zwei Magneten (41) aufweisend.
